# EUROPÄISCHE PATENTSCHRIFT

(11) **EP 2 974 823 B1**
(45) Veröffentlichungstag und Bekanntmachung des Hinweises auf die Patenterteilung: **28.02.2018**
(21) Anmeldenummer: 14177238.4
(22) Anmeldetag: 16.07.2014
(51) Int. Cl.: B23K 37/04, B23K 20/10

(54) **Ultraschall-Schweissvorrichtung und -verfahren mit einer Halterung und einer Beaufschlagungseinrichtung**
Ultrasound welding device and method with a holding means and a pressing means
Procédé et dispositif de soudage à ultrasons avec un dispositif de maintian et un dispositif de pression

(43) Veröffentlichungstag der Anmeldung: 20.01.2016
(73) Patentinhaber: Hanon Systems, Daejeon (KR)
(72) Erfinder: Engels, Friedhelm, 63628 Bad Soden-Salmünster (DE)
(74) Vertreter: Hoffmann Eitle

(56) Entgegenhaltungen:
- CN-U- 203 356 845
- JP-A- 2010 131 622
- US-A- 5 215 110

## Beschreibung

### Technisches Gebiet

Die Erfindung betrifft eine Ultraschall-Schweißvorrichtung und ein entsprechendes Verfahren gemäß dem Oberbegriff der Ansprüche 1 und 4 (siehe, z.B., US 5 215 110 A).

### Stand der Technik

Als Vorbenutzungsgegenstände sind Ultraschall-Schweißvorrichtungen bekannt, mit denen auch zwei- oder mehrteilige Werkstücke mit einem weiteren Werkstück geschweißt werden können. Dies betrifft beispielsweise Ventilgehäuse, in denen ein drehbarer Kolben vorgesehen ist, und die mit einem Gehäuseoberteil zu verschweißen sind. Um an dem fertigen Produkt den Drehkolben gewissermaßen von "außen", also von außerhalb des Gehäuseoberteils drehen zu können, reicht zumindest ein Abschnitt des Drehkolbens durch das Gehäuseoberteil hindurch, und es bestand bislang das Problem, dass an der Stelle des Durchtritts des Drehkolbens durch das Gehäuseoberteil eine unbeabsichtigte Verschweißung stattfand, die aufgebrochen werden muss. Dies hinterlässt vergleichsweise raue Oberflächen, so dass sich der Drehkolben vergleichsweise schwer bewegen lässt, was die erforderlichen Kräfte erhöht, und die Lebensdauer des Bauteils insgesamt herabsetzen kann.

CN 203 356 845 U und JP 2010-131622 A betreffen Ultraschall-Schweißvorrichtungen, und aus der US 5 215 110 A geht ein Kraftstofftank-Entlüftungsventil hervor, dessen Komponenten durch Ultraschallschweißen verbunden sein können.

### Darstellung der Erfindung

Der Erfindung liegt vor diesem Hintergrund die Aufgabe zugrunde, eine Ultraschall-Schweißvorrichtung und ein entsprechendes Verfahren zu schaffen, mit denen zweiteilige Werkstücke mit einem weiteren Werkstück verschweißt werden können, ohne dass in unbeabsichtigter Art und Weise eine Verschweißung eines bestimmten Teils eines zweiteiligen Werkstücks mit dem anderen Werkstück auftritt.

Die Lösung dieser Aufgabe erfolgt zum einen durch die im Anspruch 1 beschriebene Ultraschall-Schweißvorrichtung.

Demzufolge weist die erfindungsgemäße Vorrichtung eine Halterung für ein erstes, zumindest zweiteiliges Werkstück auf, das mit einem zweiten Werkstück zu verschweißen ist. Ferner ist eine sogenannte Beaufschlagungseinrichtung vorgesehen, die geeignet ist, ein Teil des zumindest zweiteiligen Werkstücks mit einer definierten Kraft zu beaufschlagen. Der Grundgedanke der Erfindung liegt darin, mittels der Halterung ein mehrteiliges Werkstück zu fixieren und mittels der Beaufschlagungseinrichtung ein Teil des zweiteiligen Werkstücks bezüglich des fixierten ersten Teils so zu positionieren, dass keine unerwünschte Verschweißung mit dem zweiten Werkstück stattfindet. Hierdurch können jegliche Kräfte, die, beispielsweise aufgrund der Anwesenheit von Dichtungen, zwischen dem ersten und dem zweiten Teil des mehrteiligen Werkstücks wirken, kompensiert werden. Gemäß dem Stand der Technik führen derartige Kräfte nämlich dazu, dass ein im Endzustand beispielsweise bewegliches Teil des ersten Werkstücks an dem zweiten Werkstück anliegt und hier eine unerwünschte Verschweißung stattfindet.

Die erfindungsgemäße Beaufschlagungseinrichtung wirkt derartigen, das bewegliche Teil in unerwünschter Weise positionierenden Kräften entgegen und kann beispielsweise ein Anliegen an dem zweiten Werkstück verhindern, so dass eine unerwünschte Verschweißung vermieden wird. Hierdurch ist zum einen der nachfolgende bislang notwendige Arbeitsschritt des Aufbrechens dieser Verschweißung nicht mehr nötig, was die Ausschussrate verringert. Zum anderen bleiben die betreffenden Oberflächen glatt, und die Leichtgängigkeit des beweglichen Teils sowie die Lebensdauer des Bauteils insgesamt sind gesichert.

Die beschriebenen Fixierungen und Positionierungen lassen sich besonders einfach dadurch realisieren, dass das beaufschlagte Teil des mehrteiligen Werkstücks ein inneres Teil ist, und die Halterung geeignet ist, ein äußeres Teil zu halten. Durch einen geeigneten Abschnitt des äußeren Teils hindurch wirkt die Beaufschlagungseinrichtung auf das innenliegende Teil.

Die Beaufschlagungseinrichtung weist gemäß der Erfindung eine Feder und/oder einen Stempel auf. Eine Feder eignet sich in besonderer Weise für die Aufbringung einer definierten Kraft, und mittels eines Stempels kann diese besonders präzise auf das zu beaufschlagende Teil übertragen werden.

Hierbei ist gemäß der Erfindung vorgesehen, einen Stempel an einer Seite des Kontakts mit dem beaufschlagten Teil des Werkstücks gerundet auszubilden, um keine unerwünschten Drehmomente auf das beaufschlagte Teil aufzubringen.

Bevorzugte Weiterbildungen der erfindungsgemäßen Vorrichtung sind in den weiteren Ansprüchen beschrieben.

Besonders bevorzugt wird derzeit die Verwendung der erfindungsgemäßen Schweißvorrichtung für ein zweiteiliges Werkstück in Form eines Ventilgehäuse mit einem innenliegenden Drehkolben, der mit der definierten Kraft beaufschlagt wird, wobei diese Beaufschlagung in einer Richtung im Wesentlichen senkrecht zur Drehachse des Drehkolbens stattfindet.

Besondere Vorteile entfaltet die erfindungsgemäße Schweißvorrichtung dann, wenn zwischen dem Ventilgehäuse und dem Drehkolben eine Formdichtung und/oder eine Blattfeder vorhanden ist, und die durch die Formdichtung und/oder die Blattfeder aufgebrachte Kraft im Wesentlichen der definierten, durch die Beaufschlagungseinrichtung aufgebrachten Kraft entspricht. Hierdurch werden die unerwünschten, den Drehkolben beispielsweise gegen ein mit dem Ventilgehäuse zu verschweißendes Gehäuseoberteil drückenden Kräfte kompensiert.

Die Lösung der oben genannten Aufgabe erfolgt ferner durch das im Anspruch 4 beschriebene Verfahren.

Demzufolge wird während eines Ultraschall-Schweißvorgangs ein Teil eines zweiteiligen Werkstücks mit einer Kraft beaufschlagt, während ein anderes Teil des zweiteiligen Werkstücks fixiert ist. Hierdurch können die oben genannten für die Ultraschall-Schweißvorrichtung erreichbaren Vorteile realisiert werden. Bevorzugte Ausführungsformen des erfindungsgemäßen Verfahrens entsprechen im Wesentlichen denjenigen der erfindungsgemäßen Vorrichtung. Ferner sei erwähnt, dass jegliche vorangehend und nachfolgend im Zusammenhang mit der Vorrichtung genannten Merkmale auch auf das Ultraschall-Schweißverfahren anwendbar sind und umgekehrt.

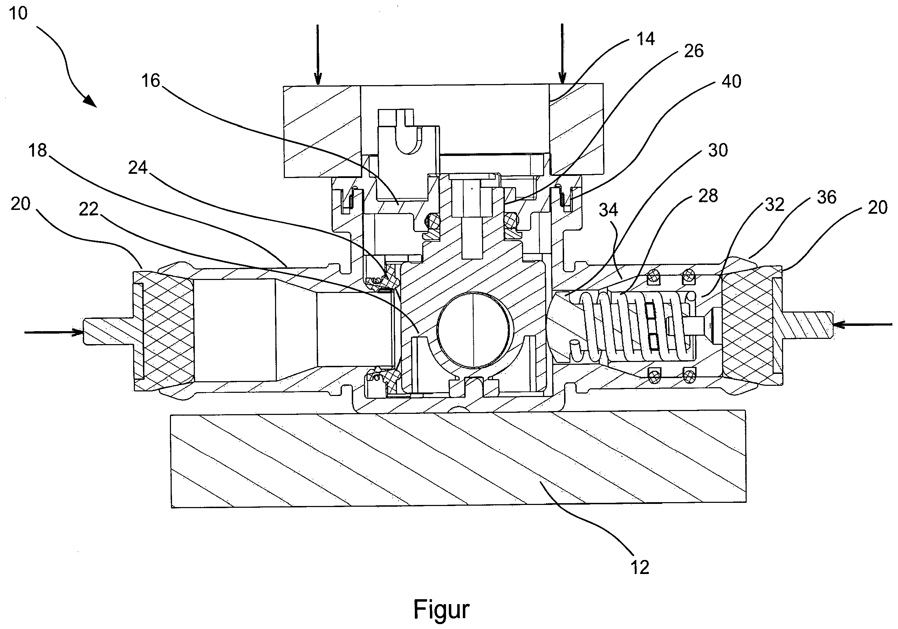

### Kurze Beschreibung der Zeichnung

Nachfolgend wird ein beispielhaft in der Zeichnung dargestelltes Ausführungsbeispiel näher erläutert.

Die Figur zeigt einen Schnitt durch wesentliche Teile der erfindungsgemäßen Ultraschall-Schweißvorrichtung.

### Ausführliche Beschreibung eines Ausführungsbeispiels

Wie in der Figur zu erkennen ist, weist die Ultraschall-Schweißvorrichtung 10 zum einen eine untere Sonotrode 12 und zum anderen eine von der Oberseite her aufgebrachte obere Sonotrode 14 auf. Mittels dieser Schweißvorrichtung wird bei dem gezeigten Beispiel ein Gehäuseoberteil 16 mit einem Ventilgehäuse 18 verschweißt. Das Ventilgehäuse 18 wird bei dem gezeigten Beispiel von links und rechts durch geeignete Druckzylinder 20 fixiert, die bei dem gezeigten Beispiel Gummianschläge aufweisen und in hohle Zu- und Ableitungen des Ventilgehäuses eingreifen. Zwischen diesen Leitungen ist bei dem gezeigten Beispiel ein Drehkolben 22 vorgesehen, der in seiner geschlossenen Stellung gezeigt ist, was daran zu erkennen ist, dass die Öffnung des Drehkolbens 22 zum Betrachter weist. Wenn der Drehkolben 22 gemäß der Figur um eine vertikale Achse um 90° gedreht wird, ist seine Öffnung mit der Zu- und Ableitung ausgerichtet, und das Ventil geöffnet.

Im Bereich links des Drehkolbens 22 ist eine Formdichtung 24 zu erkennen, die auf den Drehkolben 22 eine gemäß der Figur nach rechts gerichtete Kraft aufbringt, die zu einer Anlage des oberen Teils des Drehkolbens 22 an dem Gehäuseoberteil 16 an der Stelle 26 führt. Hier erfolgte bislang gemäß dem Stand der Technik neben dem (erwünschten) umlaufenden Verschweißen zwischen Gehäuse 18 und Oberteil 16 an der mit 40 bezeichneten Stelle eine unerwünschte Verschweißung, die mit den oben beschriebenen Nachteilen aufgebrochen werden musste.

Erfindungsgemäß ist nunmehr in Form der Feder 28 und des Stempels 30 eine Beaufschlagungseinrichtung vorgesehen, die auf den Drehkolben 22 gemäß der Figur von rechts eine definierte Kraft aufbringt, die im Wesentlichen der durch die Formdichtung 24 aufgebrachten Kraft entspricht. Der Drehkolben 22 befindet sich somit im Wesentlichen frei von äußeren Kräften in dem Ventilgehäuse 18, so dass die beschriebene Anlage und das unerwünschte Schweißen vermieden werden kann.

Bei dem gezeigten Ausführungsbeispiel stützt sich die Feder 28 im Wesentlichen an einer Hülse 32 ab, die mittels einer Schräge 34 bezüglich der Leitung 36 definiert positioniert ist, so dass mittels der Feder 28 und des Stempels 30, der die Kraft der Feder 28 auf den Drehkolben 22 überträgt, die definierte Kraft aufgebracht werden kann. Die Hülse 32 dient der Führung der Feder 28 und des Stempels 30, die gemeinsam als Entlastungseinsatz bezeichnet werden können. Der an die Hülse 32 angrenzend gezeigte Gummianschlag kann weggelassen werden. Die Hülse 32 und der Entlastungseinsatz sind derart mit dem in der Figur lediglich angedeuteten Druckzylinder 20 verbunden, dass sie nach dem Ultraschall-Schweißvorgang mit dem Druckzylinder aus der Leitung 36 zurückgezogen werden. Wie in der Figur zu erkennen ist, ist der Stempel 30 in dem gezeigten Fall im Bereich seines Kontakts mit dem Drehkolben 22 gerundet, so dass hier keine unerwünschten Momente auf den Drehkolben 22 aufgebracht werden.

## Patentansprüche

1. Ultraschall-Schweißvorrichtung (10) mit einer Halterung für ein erstes, zumindest zweiteiliges Werkstück (18), das mit einem zweiten Werkstück (16) zu verschweißen ist, mit einer Beaufschlagungseinrichtung (28, 30), die geeignet ist, ein Teil (22) des zumindest zweiteiligen Werkstücks (18) mit einer definierten Kraft zu beaufschlagen,
**dadurch gekennzeichnet, dass**
das beaufschlagte Teil (22) ein inneres Teil ist, und die Halterung geeignet ist, ein äußeres Teil (18) des zumindest zweiteiligen Werkstücks zu halten, wobei die Beaufschlagungseinrichtung zumindest eine Feder (28) und/oder zumindest einen Stempel (30) aufweist, und dass der Stempel (30) an einer Seite des Kontakts mit dem zu beaufschlagenden Teil (22) des Werkstücks (18) gerundet ausgeführt ist.

2. Ultraschall-Schweißvorrichtung nach einem der vorangehenden Ansprüche,
**dadurch gekennzeichnet, dass** das zweiteilige Werkstück ein Ventilgehäuse (18) ist, und das beaufschlagte Teil ein Drehkolben (22) ist, der im Wesentlichen senkrecht zu seiner Drehachse mit der definierten Kraft beaufschlagt wird.

3. Ultraschall-Schweißvorrichtung nach Anspruch 2,
**dadurch gekennzeichnet, dass** zwischen dem Drehkolben (22) und dem Ventilgehäuse (18) eine Formdichtung (24) und/oder eine Blattfeder vorgesehen ist, und die definierte Kraft im Wesentlichen einer durch die Formdichtung (24) und/oder die Blattfeder auf den Drehkolben (22) aufgebrachten Kraft entspricht.

4. Ultraschall-Schweißverfahren zum Verschweißen eines zumindest zweiteiligen Werkstücks (18) mit einem zweiten Werkstück (16),
**dadurch gekennzeichnet, dass** ein Teil (22) des zumindest zweiteiligen Werkstücks (18) mit einer definierten Kraft beaufschlagt wird, während ein anderes Teil des zumindest zweiteiligen Werkstücks (18) fixiert ist.

5. Verfahren nach Anspruch 4,
**dadurch gekennzeichnet, dass** das mit einer definierten Kraft beaufschlagte Teil (22) ein inneres Teil ist, und das fixierte Teil ein äußeres Teil (18) ist.

## Claims

1. Ultrasound welding apparatus (10) having a support for a first, at least two-part workpiece (18) which is to be welded to a second workpiece (16), with an impact device (28, 30) which is suitable for impacting one part (22) of the at least two-part work piece (18) with a defined force, **characterised in that** the impacted part (22) is an inner part, and the support is suitable for holding an outer part (18) of the at least two-part workpiece, wherein the impact device has at least one spring (28) and/or at least one ram (30), and **in that** the ram (30) is rounded on one side of contact with the part (22) of the workpiece (18) to be impacted.

2. Ultrasound welding apparatus according to any of the preceding claims, **characterised in that** the two-part workpiece is a valve housing (18), and the impacted part is a rotary piston (22) which is impacted with the defined force substantially perpendicularly to its axis of rotation.

3. Ultrasound welding apparatus according to claim 2, **characterised in that** between the rotary piston (22) and the valve housing (18) is provided a moulded seal (24) and/or a leaf spring, and the defined force corresponds substantially to a force applied to the rotary piston (22) by the moulded seal (24) and/or the leaf spring.

4. Ultrasound welding method for welding an at least two-part workpiece (18) to a second workpiece (16), **characterised in that** a part (22) of the at least two-part workpiece (18) is impacted with a defined force, while another part of the at least two-part workpiece (18) is fixed.

5. Method according to claim 4, **characterised in that** the part (22) which is impacted with a defined force is an inner part, and the fixed part is an outer part (18).

## Revendications

1. Dispositif de soudage par ultrasons (10) comprenant un dispositif de fixation pour une première pièce (18) qui est en au moins deux parties et qui est à souder à une seconde pièce (16) et un dispositif de serrage (28, 30) qui est approprié pour serrer avec une force définie une partie (22) de la pièce (18) en au moins deux parties,
**caractérisé en ce que**
la partie serrée (22) est une partie intérieure et le dispositif de fixation est approprié pour soutenir une partie extérieure (18) de la pièce en au moins deux parties,
dans lequel le dispositif de serrage comporte au moins un ressort (28) et/ou au moins un piston (30), et le piston (30) est arrondi d'un côté du contact avec la partie à serrer (22) de la pièce (18).

2. Dispositif de soudage par ultrasons selon l'une quelconque des revendications précédentes,
**caractérisé en ce que**
la pièce en deux parties est une cage de soupape (18) et la partie serrée est un piston rotatif (22) qui est serré avec la force définie de façon sensiblement perpendiculaire à son axe de rotation.

3. Dispositif de soudage par ultrasons selon la revendication 2,
**caractérisé en ce que**
un joint moulé (24) et/ou un ressort à lames est ou sont prévus entre le piston rotatif (22) et la cage de soupape (18) et **en ce que** la force définie correspond sensiblement à une force appliquée par le joint moulé (24) et/ou le ressort à lames sur le piston rotatif (22).

4. Procédé de soudage par ultrasons destiné à souder une pièce (18) en au moins deux parties à une seconde deuxième pièce (16),
**caractérisé en ce que**
une partie (22) de la pièce (18) en au moins deux parties est serrée avec une force définie tandis qu'une autre partie de la pièce (18) en au moins deux parties est fixée.

5. Procédé selon la revendication 4,
**caractérisé en ce que**
la partie (22) serrée avec une force définie est une partie intérieure et la partie fixée est une partie extérieure (18).
